# EUROPEAN PATENT APPLICATION

(11) **EP 2 393 298 A1**
(43) Date of publication of application: **07.12.2011**
(21) Application number: 10462005.9
(22) Date of filing: 03.06.2010
(51) Int. Cl.: H04N 13/00

(54) **Method and apparatus for generating multiple image views for a multiview autostereoscopic display device**

(71) Applicant: Korcsok, Zoltan, 5661 Ujkigyos (HU); Pasztor, Andor, 5900 Oroshaza (HU)
(72) Inventor: Korcsok, Zoltan, 5661 Ujkigyos (HU); Pasztor, Andor, 5900 Oroshaza (HU)
(74) Representative: Harangozo, Gabor

(57) **Abstract**

The method for generating multiple image views for a multiview autostereoscopic display device comprises the steps of providing a stereoscopic input image composed of a left input image and a right input image (31 a, 31 b); generating (S120) a first disparity map (33) for each respective pixel pair of the left and right input images (31a, 31 b); normalizing (S141) the first disparity map (33) so that the disparity values of the first disparity map fit to a preset maximum disparity range (-MAXD,+MAXD) associated with said display device, thereby generating a second disparity map (39); and based on the second disparity map (39), generating (S160) a preset number of synthesized images (40a-40e) for simultaneously displaying on said multiview autostereoscopic display device, wherein each pair of adjacent synthesized images presents a synthesized stereoscopic image.

## Description

Autostereoscopy is a well-known method of displaying three-dimensional images that can be viewed without the use of special headgear or glasses. Autostereoscopic displays have been developed to produce 3-D still or video images visible to the unaided eye. Currently, several technologies exist for autostereoscopic 3D displays, including the flat-panel solutions which are regarded as the most promising technology in this field. Such flat-panel 3D displays employ lenticular lenses or parallax barriers that redirect incoming imagery to several viewing regions at a lower resolution. In such displays, to achieve the different 3D images for the different viewing zones, the incoming image is split into a multitude of views corresponding to different viewing angles. These views are spliced into a 3D image and an array of cylindrical lens focuses each view into different directions. The angular separation between adjacent views is designed such that within a specified viewing distance from the display, the viewer will perceive a different image with each eye, giving a stereo image. Such displays can have multiple viewing zones allowing multiple users to view the image at the same time. In general, the number of viewing zones of such displays ranges from five to nine, but multiview autostereoscopic displays with more than ten views have also been investigated. Various literature describes the principles and technology of multiview autostereoscopic imaging, for example U.S. Pat. No. 6,064,424.

Although the most realistic multiview imaging may obtained by using multiple cameras capturing images for the respective views to be displayed, such camera configurations are expensive and also conflicting with space limitations in most case. A common solution to eliminate the need of the high number of cameras is the use of a single pair of camera for capturing a stereo image and subsequent computer image processing to synthesize the required number of additional (artificial) views for the multiview display. Such a technology is disclosed, for example, in US Patent No. 6,366,281, which relates to a panoramagram and a method for making the same from a pair of stereoscopic source images. The pair of source images is, for example, a left image and a right image having different perspective views which are spaced apart in a horizontal plane. The left image may be considered the starting image and the right image the ending image, or vice versa. Control points are defined at corresponding locations in the source images, and each control point includes position and colour information. A plurality of intermediate images are created by the so called "morphing" process from the starting image to the ending image using position and colour information from each of the corresponding locations. Preferably, the morphing process involves creating transformations of the source images based on the physical proximity from each control point; in other words, the transformation is affected strongly by control points which are nearby and is less affected by control points which are far away. Thus a continuous panoramagram is produced synthetically from the two original views, namely the left camera view and the right camera view. The intermediate images and the source images are then interdigitated to create a single output image with a continuum of views ranging from the original left image to the original right image. This solution has the drawback that the depth effect of the original stereo image is reduced in the adjacent synthesized views by the morphing between the originally captured left and right images, and therefore the 3D feeling of the viewer will be degraded, on the one hand, and the three-dimensional displaying capabilities of the applied 3D multiview display will not be exhausted, on the other hand.

It is therefore an object of the present invention to provide a method for generating multiple synthesized images for a multiview autostereoscopic display, wherein the input stereoscopic images are processed so that the depth effect of each image view displayed on the multiview stereoscopic display reach its maximum level with respect to the capabilities of the particular display.

These and other objects are achieved by providing a method according to claim 1. The above objects are further achieved by providing an apparatus according to claim 9. Preferred embodiments of the method and the apparatus according to the invention are defined by the appended dependent claims.

The present invention will now be described through its preferred embodiments with reference to the accompanying drawings, in which
Figure 1 is a flow diagram illustrating the steps of the method according to the present invention,
Figure 2 is a flow diagram illustrating the steps of the adaptive optimization performed in the method according to the present invention,
Figure 3 shows image representations of the intermediate image processing stages in a preferred embodiment of the method according to the invention
Figure 4 is simplified schematic view illustrating the overlap area detection in the method according to the invention,
Figures 5a and 5b are simplified schematic views illustrating the generation of the synthesized image pixel values in a scan line in the method according to the present invention, and
Figures 6.a and 6.b illustrate examples for the relative viewing positions of the synthesized views with respect to the left and right input images.

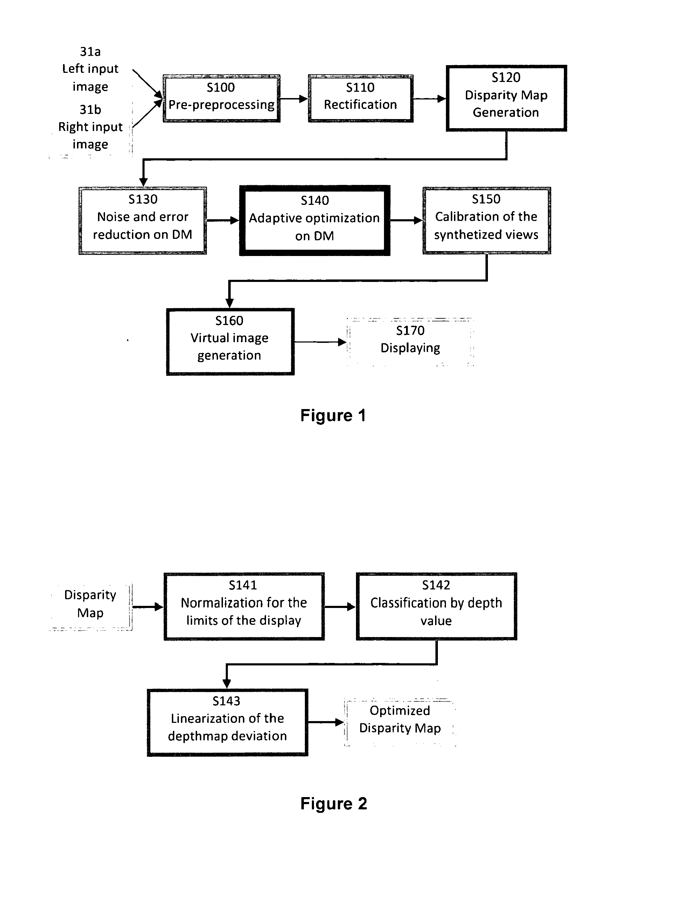

The basic steps of the method according to the invention are described with reference to Figure 1, which shows a schematic flow diagram of the method, and Figure 2, which illustrates the image representations of the intermediate image processing stages based on an exemplary input pair of stereoscopic images.

The input stereoscopic image of the method is formed by an associated pair of input images, referred to as left and right input images, that may be either still images or video frames. In case of video frames, the subsequent input frame pairs of the video stream are processed and displayed in a video stream. The input images may be obtained by a stereoscopic photo camera, a stereoscopic video recorder or they may be created even by an appropriate computer program that generates rendered stereoscopic images with a format suitable for further processing by the method according to the invention.

As shown in Figure 1, in the first step S100, the input images 31a and 31b are subject to a pre-processing, wherein the left and right input images 31 a, 31 b are filtered by a noise filtering algorithm to obtain image intensity information from the input images 31 a and 31 b. It should be noted that from the point of view of the method according to the invention, the image intensity information has higher significance than the colour intensity information, this latter being more important in the prior art image processing methods.

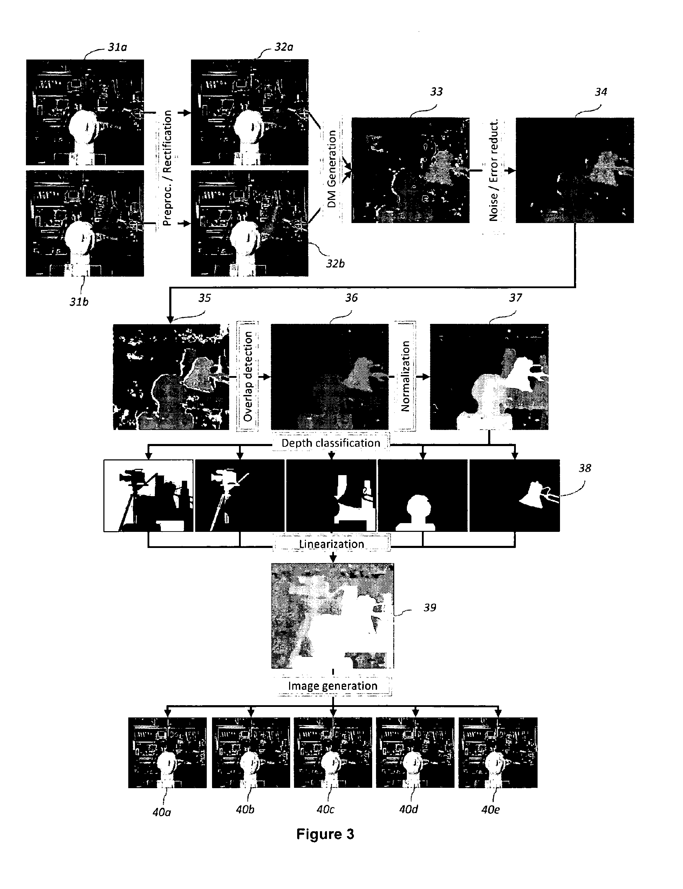

In the next step S110, the filtered images 32a, 32b are subject to rectification to produce rectified images 32a and 32b illustrated in Figure 3. Rectification is used to produce an image pair, wherein there exist pixel displacements between the left and right images only in horizontal direction, i.e. the left and right images present a relative displacement only horizontally. Rectification of the input image pair is necessary to allow for the following disparity map generation algorithm to seek only for unidirectional (i.e. horizontal) pixel displacements with respect to the left and right images. This simplification therefore reduces the required computational power of the rectification process to a great extent, thereby also facilitating the real time image processing, for which there exists a high demand, in particular in 3D video imaging.

Although the rectification and a subsequent search for pixel displacements in a single direction might be substituted by a bidirectional search for the pixel displacements in the input image pair, the computational costs are lower in the former case and therefore that solution is preferred in the method according to the invention.

Rectification is carried out by a specific algorithm that searches for corresponding pixels in the left and right images. As a result, the rectification process provides, for each pixel of the left image, the position of the corresponding pixel in the right image, wherever it is available. Thereby a two-dimensional vector field is generated for the left image to define the corresponding pixels in the right image by directed vectors. The right input image is then distorted in Step S120 so that only horizontal displacements will be shown in the right input image with respect to the left input image. The one-dimensional vector field, or displacement field, thus obtained is the so called "disparity map" in which defines for each pixel of the base image (i.e. left input image) a unidirectional (e.g. horizontal) displacement giving the position of the corresponding pixel in the other (i.e. the right) input image. If the displacement has a negative value, the pixel is moved to the left relatively to the base image, whereas a positive value for the displacement means a relative movement to the right. If the displacement is zero, the particular pixel remained in the same position within the input image pair. In the special case when the value of the displacement is "void", the particular pixel of the base image does not exist on the other input image. This latter case occurs when a portion of the base image of the input image pair becomes covered in the other image of input image pair.

A gray-scaled graphical representation of the disparity map for the input images 31 a and 31 b are illustrated in Figure 3 as image 33.

We note that for the sake of simplicity, always the left input image will be regarded as the base image for the disparity map throughout the present description, it is obvious for a skilled person that the disparity map may equally be generated with the right input image being the base image.

Generation of the disparity map in Step 120 may be carried out, for example, by a windows-based search, wherein for each pixel of the input base image (i.e. the left image in this example), a window of N by M pixels is formed and the same (or minimally different) window is sought along the line of the particular pixel (referred to as "scan line" below) within a distance of ±D. Due to the rectification performed previously, there is only one-directional, namely horizontal, displacements between the corresponding pixels of the two images of the input image pair. Hence, a one-directional search is enough to be carried out for the generation of the disparity map. A more detailed introduction to the above mentioned window-based disparity map generation procedure can be found in the US Patent No. 6,314,211, the content of which is incorporated here by reference and described in this specification only with respect to the particular application thereof in the preferred embodiments of the present invention.

To cover the inherent noises, compression losses and other errors, the value of N and M are to be set to high enough, although some care should be taken when adjusting the values for N and M because in case N and M had too high values, the search method could not perhaps find coincidences at the depth boundaries. For the same reason, the value of D should also be set at least to a value equal to the greatest pixel displacement between the two input images.

Concerning the particular values of N, M and D, it is recommended that N and M be 0,5-1% and D be 5-10% of the width of the image (or the height of the image in case of a standing image). It is obvious for a skilled person that both ranges in the foregoing depend strongly on the particular content of the input image pair. If, for example, the input image is blurred, the cited range for N and M might be insufficient. On the other hand, if an object shown in the image presents a too intensive depth effect (i.e. it appears to pop-out from the image plane to an excessive extent), causing great displacement values for the pixels of the object, the above range for the value of D might be insufficient as well. In order to eliminate these issues, an adaptive adjustment for the values of N, M and D may be used, wherein the search is started by applying the above recommended values and if no identical or sufficiently similar areas can be found with using these values, said values will be increased until the degree of similarity will be acceptable or the maximum values of N, M and D are achieved.

As the disparity map thus obtained probably contains noises or other errors, these noises and errors should be reduced or even removed from the disparity map by appropriate noise filtering and/or error reduction algorithms carried out in Step 130 shown in Figure 1, the result of which can be seen in Figure 3 as image 34 in the present example.

Noise filtering may be carried out by using any conventional filtering algorithm, such as the well-known median filtering. In this context, an area with highly deviating disparity values relative to its environment while having a negligible surface (i.e. an area having so small surface as it cannot be regarded as an individual object at all), is also considered as noise and thus matched to its environment, for example, by replacing its disparity values with the average of the its surrounding disparity values.

The above improved disparity map may further contain overlapped portions, presented by white areas in the image 35 of Figure 3. The overlap areas are defined as areas which can be seen in either of the input image but cannot be found in the other image of the input image pair because of being in an overlap position in the other image seen from the corresponding point of view. For such overlap portions of the base image, the search method for generating the disparity map will not obviously be able to find the corresponding image pixels on the other image of the input image pair. Consequently, such overlap areas should be filtered out to reduce the error of the disparity map. The result of this overlap area detection can be seen in Figure 3 as image 36.

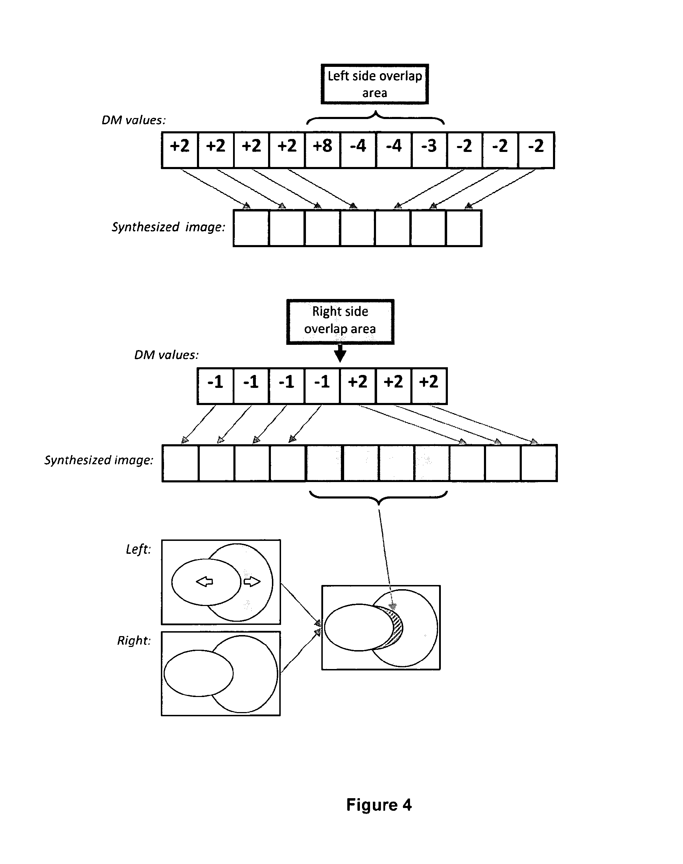

There are two types of overlap area, one of which is referred to as a left side overlap area, whereas the other one is referred to as a right side overlap area. The phenomenon of the overlap areas will now be explained with reference to Figure 4.

The overlap area is of the left side type when it is present on the left input image, but not present in the right input image as two separate areas with different depths in the left image get closer to each other on the right image. Such a left side overlap area disappears from the right image. Concerning the disparity values, for which a specific example is illustrated in Figure 4, the left side overlap may be recognised in the following way. Assuming that in the positions I and J along a scan line of the disparity map, the disparity values are V and W, respectively, where W<V, the difference J-I should be equal to or greater than the value of the expression W-V+1. Areas that violate this condition appear to move toward each other and therefore are regarded as left side overlap areas. These areas may be treated as noise.

Analogously, the right side overlap area is defined as an area that cannot be seen in the left and input image, but it becomes visible in the right input image because two adjacent objects in the left image get further from each other on the right image, i.e. a portion of an object being in a covered position becomes uncovered in the right image. Concerning the disparity values, the right side overlap may be recognised in the following way. Assuming that in the position I and I+1 along a scan line of the disparity map, the disparity values are V and W, respectively, if the condition V ≠ W is satisfied, right side overlap occurs. In this case, the content of the overlap areas in the synthesized images will be obtained from the right input image. An example for the right side overlap is illustrated also in Figure 4.

In order to produce the highest possible three-dimensional effect in the displayed stereoscopic images, the disparity map processed by the above methods, resulted in the representation as shown by image 36 of Figure 3, for example, is further processed by an optimizing procedure in a preferred embodiment of the method according to the present invention. The step of this optimization is illustrated as step S140 in Figure 1.

The objects of the optimizing procedure include:
- adaptive adjustment of the focal points of the virtual cameras associated with the synthesized views;
- according to the adjusted focal points of said virtual cameras, extension of the displacement values of the disparity map to cover the widest possible range available for the particular display in use with respect to the capabilities of said display;
- modification of the displacement values of the disparity map so that the distribution of the displacement values approach a uniform distribution to the highest possible extent without visible distortion of the image contents with respect to the original images of the input image pair.

The adjustment of the focal points of the virtual cameras associated with the synthesized view is necessary in order to compensate possible focusing errors of a real stereo camera, such as a focal point at the infinity or parallel viewing directions for the left and right cameras. If an image were captured, for example, by a stereo camera with parallel viewing directions for the left and right cameras, the focal point of the recorded images would be located at the infinity when a focal point adjustment of the synthesized views would not be done. In lack of such an adjustment, the synthesized views would not be imperfect and would not provide a sufficient spatial effect. Adjustment of the focal points of the virtual cameras will actually be performed by the following two issues.

Concerning the second issue above, it is well-known that in all display devices there can be defined a specific maximum displacement value, above which the image becomes blurred or spurious to the extent that cannot be tolerated by the viewer any more. This critical displacement is about 1-2% of the maximum resolution of the display device. As the maximum disparity between two adjacent views cannot exceed this critical value, a maximum displacement value MAXD is defined for the particular multiview display where MAXD is equal to a pre-set critical displacement value multiplied by the number of views presented by the display device. For example, in case a critical displacement of 1% is pre-set in the method and the display is capable of presenting seven views, MAXD will have a value corresponding to the 7% of the maximum resolution of the display device. The value of MAXD may be exhausted in both positive and negative directions since an object accommodating in front of the focal point in the depth direction moves to the left in the right input image with respect to the left input image (or similarly, to the right in the left input image with respect to the right input image), whereas an object behind the focal point moves to the opposite direction. The position in the input images where no displacement takes place between the two input images, will be deemed the focal point of the (real or virtual) stereo camera. All contents behind this focal point are referred to as "inscreen" contents, whereas all contents in front of said focal point are referred to as "outscreen" contents. In other words, inscreen objects appear behind the plane of the display in the depth direction, and outscreen objects appear in front of the plane of the display, i.e. these objects "pop-out" from the display toward the viewer.

The foregoing object is achieved by the normalization of the disparity map carried out in Step S141 shown in Figure 2. In the normalization step, the disparity values of the disparity map are scaled up to cover the entire range between -MAXD and +MAXD. The normalized disparity map thus obtained is represented by image 37 in Figure 3.

The third object of the optimization, i.e. providing an approximately uniform distribution for the displacement values of the disparity map, addresses to modify the disparity map so that no object appears in the synthesized views excessively far from or excessively close to the viewer in the depth direction. In case an object were located too close to the camera, its associated disparity values would not change much upon the normalization of the disparity map, however, the disparity values of other objects accommodating farther from this object in the depth direction might be scaled up to a relatively greater extent, which would result in a relative reduction between the disparity of the particular object and said other farther objects in the synthesized view, thus causing a substantial degradation of the spatial or depth effect in the synthesized views.

One possible approach to achieve the above mentioned approximately uniform distribution for the disparity values of the disparity map is to provide a substantially linear distribution of the depth values associated with the various objects in the image. Obviously, such a transformation of the disparity map results in a distortion of the spatial ratios between the objects visible in the input image, which might disturb the viewer. Such a distortion may include the stretch or the compression of an object with respect to the original size thereof in the input image. To avoid or at least to minimize the visible disturbing effects of such a distortion, it is preferred that the unimportant intermediary areas between the objects are transformed instead of the objects themselves. To this end, in step 142, a classification (or clustering) of the objects in the input image is carried out before the above mentioned step of linearization. The aim of this classification step is to separate the objects in the input image into multiple groups depending on the intensity and the depth of the objects. The result of such a classification step in the example of Figure 3 is represented by images 38.

After completing this classification step, disparity values of the related objects are scaled up to a relatively lower extent, whereas disparity values of the intermediary areas between the clustered objects are scaled up more intensively in step S143 shown in Figure 2. An exemplary representation of the disparity map resulted from the foregoing step of linearization can be seen in Figure 3 as image 38.

By taking the latter two steps, i.e. the classification and the linearization of the disparity map, the first condition above will be also satisfied for the following reason. Since the disparity maps are scaled up to extend over the entire range from -MAXD to +MAXD, there must be disparity values with zero or approximately zero values which define a base plane, wherein objects presented in this base plane appear at a half depth of the entire depth range sensed by the viewer on the display. This base plane is regarded as the plane to which focusing of the synthesized views actually takes place. This base plane is common for the left and right images of the synthesized image pairs. Consequently, negative disparity values define objects appearing behind said base plane embedding the focal point of the virtual cameras, whereas positive disparity values define objects appearing in front of said base plane, i.e. the outscreen content.

Having optimized the disparity map by completing the above steps of normalization, classification and linearization, a calibration of the synthesized views are carried out in step S150 followed by generating the particular synthesized views for simultaneously displaying on the multiview stereoscopic display device in step S160, as shown in Figure 1.

In the step of calibration, the number of synthesized views (N) and the value of the interpolation displacement (H) may be adjusted by taking the available features of the display device into view. By varying the value of H, the extent of displacement of the synthesized views towards the left input image or the right input image can be controlled. For example, if H is set to a relatively high value, the synthesized views are moved toward the right input image, causing the user to observe the object of the input image from rather left side.

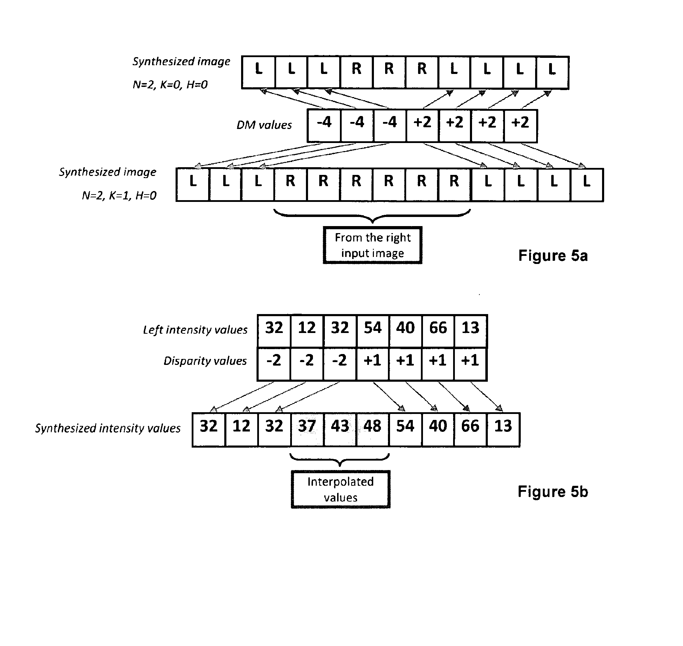

Upon the calibration of the synthesized views, the particular synthesized views can be generated. Some exemplary synthesized image views are illustrated in Figure 3 as images 40a to 40e. In the following, the step of synthesized image generation will be described in detail with reference to a particular example illustrated in Figures 5a and 5b.

Assuming that N synthesized views are to be generated, where N ≥ 2, and the Kth view is the next view to be generated, where 0 ≤ K ≤ N-1, the pixel values of this image view are calculated by the following algorithm.
1. Each pixel P(x, y) of the left input image is presented at the pixel position P'(x+D,y) of the Kth view, where D=(K / (N-1) - H) * DM[x, y] and DM[x,y] is the disparity value at position (x, y) of the optimized disparity map. This algorithm determines a linear interpolation with a displacement of H within a normalized interval of the disparity values ranging between 0 and 1. Due to this transformation the original left input image is distorted so that the synthesized views appear between the left and the right input image, or even beyond them as well, as a result of the above mentioned normalization of the disparity map. If H=0 and K=0, then the synthesized view will have the same viewing angle as that of the left-side real camera because D=0 in this case.

As shown in Figure 5.a, when two synthesized views are generated according to the optimized disparity map (i.e. N=2), for K=0 and H=0, the disparity value of -4 will be transformed to a normalized displacement D=-2, and for K=1 and H=0, the disparity value of +2 will be transformed to a normalized displacement D=+2. The pixel values of the original left image are displaced by -4 or +2 in the first and second synthesized views with K=0 and K=1, respectively.
2. In the areas where right-side overlap has been detected, i.e. areas which can be seen in the right input image but cannot seen in the left input image, those areas of the right input image may be used to be added to the undefined areas of the synthesized views. These pixels are indicated with "R" in the exemplary synthesized scan lines in Figure 5.a. Since no pixel information from the left input image is available for these areas of the synthesized views, corresponding pixels of the right input image are inserted therein.
3. Due to the scaling-up of the disparity map in the normalization step, there might also be areas in a particular synthesized view which cannot be seen in either of the input images because of the so called overdistortion, i.e. when the particular synthesized view is generated with a virtual point of view from which certain portions of the synthesized view could not be seen from the real viewing point used for the input images. To provide pixel information for such areas, pixels of the synthesized view may be interpolated from known adjacent portions of the input images along the scan line. A particular example for such a situation is illustrated in Figure 5.b.

In Figure 5.b, a portion of a line of the optimized disparity map and the corresponding pixel intensity values are presented. As can be seen in the figure, there are three pixels that do not appear in none of the left and right input images because of the overdistortion mentioned in the foregoing. Taking the adjacent pixel intensity values V and W, i.e. 32 and 54, respectively, in this example, for the undefined range of N pixels in the scan line of the synthesized view, intensity P of the Kth pixel may be defined by the expression P = V + (W - V) * ((K+1) / (N+1 )), yielding pixel intensity values 37, 43 and 48 for the three undefined pixels of the particular scan line.

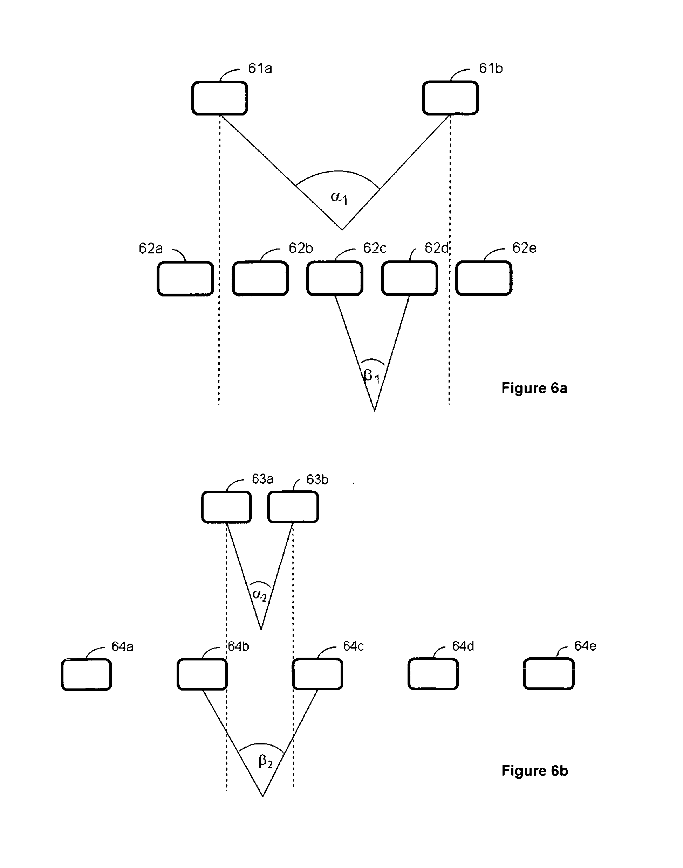

Finally, the synthesized views are presented on a multiview stereoscopic display in a conventional manner in Step 170. In Figures 6.a and 6.b, examples for the relative viewing positions of the synthesized views with respect to the left and right input images are illustrated for a multiview stereoscopic display with five views. As shown in Figure 6.a, due to the content (not shown) of the input stereo image, the five synthesized views 62a to 62e are presented substantially within the viewing angle α₁ associated with the left and right input images 61 a and 61 b, resulting in a reduced viewing angle β₁ for the adjacent synthesized views 62a to 62e, each adjacent pairs thereof defining a synthesized stereoscopic image. This occurs when the stereoscopic input image contains objects that appear to the maximum distance from each other which can be presented on the particular display. In this case the intermediate synthesized views 62b, 62c and 62d substantially appear as interpolated views between the left and right input images 61 a and 61 b.

Figure 6.b illustrates another example where the synthesized views 64a to 64e are positioned outside the input views 63a and 63b as the viewing angle β₂ associated with two adjacent synthesized views are greater than the viewing angle α₂ associated with the left and right images 63a and 63b of input stereo image. Typically, this situation occurs when the objects of the input image appear like accommodating within a narrow transversal space volume in the depth direction, i.e. hardly any spatial effect can be observed by the viewer in the input stereo image.

The number of synthesized views depends on the type of the display and therefore this number is an adjustable parameter in the method according to the invention. It also preferred that the value of MAXD may be set depending on the number of views presented by the display device. It is further preferred that MAXD is set to a multiple of 1% according to the number of views of the multiview display. For example, in case of a multiview display with five views, MAXD is to be set to 5% of the maximum pixel resolution of the display, whereas for a multiview display with eleven views, MAXD may be set even to 11% of the display's maximum pixel resolution in order to present three dimensional views with the highest possible spatial or depth effect that can be reached by the particular multiview autostereoscopic display.

It should be noted that in the method according to the present invention, only synthesized views generated on the basis of the left and right input images are presented in the display and only in special cases it may occur that any of the synthesized views is identical to any of the input images. In practice, this is a rather rare situation. Another important feature of the method according to the present invention is that the viewing positions of the synthesized view depend on the content of current input image pair as, well as the number of the views presented by the multiview display, thus a particular synthesized view may appear between the left and right views of the input image (which are not presented by the display generally) or even outside (beyond) the view of the input image. However, the spatial or depth effect of the presented synthesized views is at least maintained at the level of the input image or may be even amplified to some extent relatively to that of the input image.

In a second aspect, the present invention also relates to an apparatus for generating multiple image views for a multiview autostereoscopic display device, wherein said apparatus comprises means for receiving a stereoscopic input image composed of a left input image and a right input image, means for generating a first disparity map for each respective pixel pair of the left and right input images, means for normalizing the first disparity map so that the disparity values of the first disparity map fit to a preset maximum disparity range determined depending on the particular display device, thereby generating a second disparity map, and means for generating, according to the second disparity map, a preset number of synthesized images for simultaneously displaying on a multiview autostereoscopic display device, wherein each pair of adjacent synthesized images presents a synthesized stereoscopic image.

Preferred embodiments of the apparatus according to the invention may comprise further means for carrying out any of the foregoing steps of the method according to the present invention. The configuration of these embodiments of the apparatus is obvious for those skilled in the art on the basis of the above specification of the method according to the invention, and therefore those are not detailed herein.

More particularly, the apparatus may further comprise a means for filtering noise in the left and right input images as mentioned above in relation to the pre-processing step S100 of the method according to the invention. The apparatus may also comprise a means for rectifying the input images to obtain only one-directional displacements in either of the left and right input image with respect to the other one. Such a means may be used in step S110 of the method according to the invention and may also be adapted to perform the rectification in the stereoscopic input image in the horizontal direction.

The apparatus may further comprise a means for filtering noise and reducing errors in the first disparity map in accordance with step S130 of the method according to the invention. Preferably, the apparatus also comprises a means for the classification of the objects in the stereoscopic input image and a means for the linearization of the disparity map to produce said normalized second disparity map to perform steps S142 and S143 of the method according to the invention, respectively.

In a particularly preferred embodiment, the apparatus may further comprise a means for calibrating the synthesized views for the generation thereof, said calibration means including a means for adjusting the number of the synthesized views to be generated, as well as the value of the interpolation displacement. Such a calibration means may be used in step S150 of the method according to the present invention.

The apparatus according to the invention is preferably adapted to receive a stereoscopic still image, a stereoscopic video frame or a stereoscopic rendered computer image as a stereoscopic input image.

Although in the foregoing, several preferred embodiments of the method and the apparatus according to the invention have been illustrated, the present invention is not in any way limited to the exemplary embodiments shown in the description and the drawings and many variations thereof are possible within the scope of the invention defined by the appended claims.

## Claims

1. A method for generating multiple synthesized images for a multiview autostereoscopic display device, the method comprising the steps of:
- providing a stereoscopic input image composed of a left input image and a right input image (31 a, 31 b),
- generating (S120) a first disparity map (33) for each respective pixel pair of the left and right input images (31 a, 31 b),
- normalizing (S141) the first disparity map (33) so that the disparity values of the first disparity map fit to a preset maximum disparity range (-MAXD,+MAXD) associated with said display device, thereby generating a second disparity map (39), and
- based on the second disparity map (39), generating (S160) a preset number of synthesized images (40a-40e) for simultaneously displaying on said multiview autostereoscopic display device, wherein each pair of adjacent synthesized images presents a synthesized stereoscopic image.

2. The method according to claim 1, wherein the method further comprises a step of filtering noise in the left and right input images (S100).

3. The method according to claim 1 or 2, wherein the method further comprises a step of rectifying (S110) the input image to obtain only one-directional displacements in either the left input image (31a) or the right input image (31b) with respect to the other one.

4. The method according to claim 3, wherein rectification is performed in the input images in the horizontal direction.

5. The method according to any one of claims 1 to 4, wherein the method further comprises a step of noise filtering and error reduction (S130) in the first disparity map.

6. The method according to any one of claims 1 to 5, wherein the method further comprises a step of classification (S142) of the objects in the stereoscopic input image and a step of linearization (S142) of the disparity map to produce said normalized second disparity map.

7. The method according to any one of claims 1 to 6, wherein the method further comprises a step of calibration (S130) of the synthesized images (40a-40e) for the generation thereof, said step of calibration including the adjustment of the number of the synthesized images (40a-40e) to be generated and the value of the interpolation displacement.

8. The method according to any one of claims 1 to 7, wherein the stereoscopic input image is a stereoscopic still image, a stereoscopic video frame or a stereoscopic rendered computer image.

9. An apparatus for generating multiple synthesized images for a multiview autostereoscopic display device, the apparatus comprising
- a means for receiving a stereoscopic input image composed of a left input image (31 a) and a right input image (31 b),
- a means for generating a first disparity map (33) for each respective pixel pair of the left and right input images (31 a, 31 b),
- a means for normalizing the first disparity map (33) so that the disparity values of the first disparity map fit to a preset maximum disparity range (-MAXD,+MAXD) associated with said multiview autostereoscopic display device, thereby generating a second disparity map (39), and
- a means for generating, according to the second disparity map (39), a preset number of synthesized images (40a-40e) for simultaneously displaying on said multiview autostereoscopic display device, wherein each pair of adjacent synthesized images presents a synthesized stereoscopic image.

10. The apparatus according to claim 9, wherein the apparatus further comprises a means for filtering noise in the left and right input images (31 a, 31 b).

11. The apparatus according to claim 9 or 10, wherein the apparatus further comprises a means for rectifying the stereoscopic input image to obtain only one-directional displacements in either the left input image (31a) or the right input image (31 b) with respect to the other one.

12. The apparatus according to claim 11, wherein said means for rectifying the stereoscopic input image is adapted to perform the rectification in the stereoscopic input image in the horizontal direction.

13. The apparatus according to any one of claims 9 to 12, wherein the apparatus further comprises a means for filtering noise and reducing errors in the first disparity map.

14. The apparatus according to any one of claims 9 to 13, wherein the apparatus further comprises a means for the classification of the objects in the stereoscopic input image and a means for the linearization of the disparity map to produce said normalized second disparity map.

15. The method according to any one of claims 9 to 14, wherein the apparatus further comprises a means for the calibration of the synthesized images (40a-40e) for the generation thereof, said calibration means comprising a means for adjusting the number of the synthesized images (40a-40e) to be generated and the value of the interpolation displacement.

## Amended claims

### Amended claims in accordance with Rule 137(2) EPC.

**1.** A method for generating multiple synthesized images for a multiview autostereoscopic display device, the method comprising the steps of:
a) providing a stereoscopic input image composed of a left input image (31 a) and a right input image (31 b),
b) determining respective pixel pairs of the left and right input images (31 a, 31 b),
c) generating (S120) disparity information from the respective pixel pairs of the left and right input images (31 a, 31 b) in the form of a first disparity map (33),
d) upscaling (S141) each disparity value of said first disparity map (33) so that the range of the upscaled disparity values reaches at least one of the boundaries of a preset maximum disparity range (-MAXD,+MAXD) associated with said display device, thereby generating a second disparity map (39), and
e) based on said second disparity map (39), generating (S160) a preset number of synthesized images (40a-40e) for simultaneously displaying on said multiview autostereoscopic display device, wherein each pair of adjacent synthesized images presents a synthesized stereoscopic image.

**2.** The method according to claim 1, wherein the method further comprises a step of filtering noise in the left and right input images (S100).

**3.** The method according to claim 1 or 2, wherein the method further comprises a step of rectifying (S110) the input image to obtain only one-directional displacements in either the left input image (31 a) or the right input image (31 b) with respect to the other one.

**4.** The method according to claim 3, wherein rectification is performed in the input images in the horizontal direction.

**5.** The method according to any one of claims 1 to 4, wherein the method further comprises a step of noise filtering and error reduction (S130) in the first disparity map.

**6.** The method according to any one of claims 1 to 5, wherein the method further comprises a step of classification (S142) of the objects in the stereoscopic input image and a step of linearization (S142) of the disparity map to produce said normalized second disparity map.

**7.** The method according to any one of claims 1 to 6, wherein the method further comprises a step of calibration (S130) of the synthesized images (40a-40e) for the generation thereof, said step of calibration including the adjustment of the number of the synthesized images (40a-40e) to be generated and the value of the interpolation displacement.

**8.** The method according to any one of claims 1 to 7, wherein the stereoscopic input image is a stereoscopic still image, a stereoscopic video frame or a stereoscopic rendered computer image.

**9.** An apparatus for generating multiple synthesized images for a multiview autostereoscopic display device, the apparatus comprising
- a means for receiving a stereoscopic input image composed of a left input image (31 a) and a right input image (31 b),
- a means for determining respective pixel pairs of the left and right input images (31 a, 31 b),
- a means for generating disparity information from said respective pixel pairs of the left and right input images (31 a, 31 b) in the form of a first disparity map (33),
- a means for upscaling each disparity value of said first disparity map (33) so that the range of the upscaled disparity values reaches at least one of the boundaries of a preset maximum disparity range (-MAXD,+MAXD) associated with said display device, thereby generating a second disparity map (39), and
- a means for generating, based on said second disparity map (39), a preset number of synthesized images (40a-40e) for simultaneously displaying on said multiview autostereoscopic display device, wherein each pair of adjacent synthesized images presents a synthesized stereoscopic image.

**10.** The apparatus according to claim 9, wherein the apparatus further comprises a means for filtering noise in the left and right input images (31 a, 31 b).

**11.** The apparatus according to claim 9 or 10, wherein the apparatus further comprises a means for rectifying the stereoscopic input image to obtain only one-directional displacements in either the left input image (31 a) or the right input image (31 b) with respect to the other one.

**12.** The apparatus according to claim 11, wherein said means for rectifying the stereoscopic input image is adapted to perform the rectification in the stereoscopic input image in the horizontal direction.

**13.** The apparatus according to any one of claims 9 to 12, wherein the apparatus further comprises a means for filtering noise and reducing errors in the first disparity map.

**14.** The apparatus according to any one of claims 9 to 13, wherein the apparatus further comprises a means for the classification of the objects in the stereoscopic input image and a means for the linearization of the disparity map to produce said normalized second disparity map.

**15.** The method according to any one of claims 9 to 14, wherein the apparatus further comprises a means for the calibration of the synthesized images (40a-40e) for the generation thereof, said calibration means comprising a means for adjusting the number of the synthesized images (40a-40e) to be generated and the value of the interpolation displacement.
